# EUROPÄISCHE PATENTSCHRIFT

(11) **EP 1 394 477 B1**
(45) Veröffentlichungstag und Bekanntmachung des Hinweises auf die Patenterteilung: **26.10.2005**
(21) Anmeldenummer: 03019132.4
(22) Anmeldetag: 23.08.2003
(51) Int. Cl.: F24F 3/16, H05H 1/24

(54) **Ionisationsröhre**
Ionization tube
Tube de ionisation

(30) Priorität: 26.08.2002 DE 10239095
(43) Veröffentlichungstag der Anmeldung: 03.03.2004
(73) Patentinhaber: Schröder, Werner, 31542 Bad Nenndorf (DE)
(72) Erfinder: Schröder, Werner, 31542 Bad Nenndorf (DE)
(74) Vertreter: Joppich, Martin

(56) Entgegenhaltungen:
- CH-A- 666 372
- DE-A- 10 127 035
- PATENT ABSTRACTS OF JAPAN vol. 2002, no. 08, 5. August 2002 (2002-08-05) -& JP 2002 115861 A (SHARP CORP), 19. April 2002 (2002-04-19)
- PATENT ABSTRACTS OF JAPAN vol. 2002, no. 12, 12. Dezember 2002 (2002-12-12) -& JP 2002 224211 A (SHARP CORP), 13. August 2002 (2002-08-13)
- PATENT ABSTRACTS OF JAPAN vol. 2002, no. 08, 5. August 2002 (2002-08-05) -& JP 2002 117956 A (SHARP CORP), 19. April 2002 (2002-04-19)
- PATENT ABSTRACTS OF JAPAN vol. 2002, no. 07, 3. Juli 2002 (2002-07-03) -& JP 2002 075588 A (SHARP CORP), 15. März 2002 (2002-03-15)

## Beschreibung

Die Erfindung betrifft eine Ionisationsröhre für ein Luftreinigungsgerät mit einem Glaskolben, mit einer als Feinblechhülse geformten Innenelektrode und mit einer Außenelektrode.

Eine derartige Ionisationsröhre ist aus CH 666 372 A5 bekannt.

Es ist grundsätzlich bekannt, mit Ionisationsröhren Raum- oder Atemluft zur Verminderung von Schadstoffen zu behandeln. Schadstoffe bzw. Geruchsstoffe bilden meist komplexe und große Moleküle, die durch die Ionisationsröhre in kleinmolekulare Fragmente aufgespalten werden. Gleichzeitig bilden sich durch die Ionisation Radikale und hier insbesondere Sauerstoffradikale, die dann mit den aufgespaltenen Fragmenten oxidieren können. Die Ionisation basiert dabei auf einer kontrollierten Gasentladung, die zwischen zwei Elektroden und einem dazwischen liegenden Dielektrikum stattfindet, wobei die Elektroden typischerweise mit einer hochfrequenten Wechselspannung mit Scheitelwerten zwischen 500 V und 10 kV und mit einer Frequenz zwischen 10 kHz und 50 kHz angesteuert werden. Die Gasentladung stellt eine Barriereentladung dar, wobei das Dielektrikum als dielektrische Barriere wirkt. Hierdurch werden zeitlich begrenzte Einzelentladungen erreicht, die vorzugsweise homogen über die gesamte Elektrodenfläche verteilt sind. Charakteristisch für diese Barriereentladungen ist, dass der Übergang in eine thermische Bogenentladung durch die dielektrische Barriere verhindert wird. Die Entladung bricht ab, bevor die bei der Zündung entstehenden hochenergetischen Elektronen (1 - 10 eV) durch Thermalisierung ihre Energie an das umgebene Gas abgeben.

Insbesondere für den Haushaltsbereich sind bereits verschiedene Anwendungen für Luftreinigungsgeräte mit einer Ionisationsröhre vorgeschlagen worden. Beispielsweise ist es aus DE 198 10 497 A1 bekannt, ein Luftreinigungsgerät in einer Toilette zur Beseitigung von Gerüchen vorzusehen. Hierzu leiten geeignete Absaugvorrichtungen mit Luftführungen am oberen Spülrand des WC Beckens oder in einem Hohlkanal im Toilettensitz die belastete Luft zu der Ionisationsröhre, um eine Verminderung der Geruchsbelästigung zu erreichen.

Ein Problem beim Betreiben der Ionisationsröhre ist die Ansteuerung der Ionisationsröhre mit einer bedarfsgerechten Ionisationsleistung. Wird die Ionisationsröhre mit zu wenig Ionisationsleistung beaufschlagt, erfolgt eine unbefriedigend niedrige Ionisation, während bei zu hoher Ionisation mitunter zu viel Ionen und Radikale freigesetzt werden, die beim Benutzer den Eindruck des Geruchs eines scharfen Ätz- bzw. Säuberungsmittels hinterlassen. In diesem Betriebszustand kommt es neben der Bildung von Ionen auch zur Produktion von Ozon, dessen Überproduktion ebenfalls unerwünscht ist.

Zur Lösung dieses Problems wird in DE 43 34 956 C2 beschrieben, dass eine gewünschte Ionisation in Abhängigkeit von dem Scheitelwert der Wechselspannung erreicht werden kann, die zwischen der Innenelektrode und der Außenelektrode anliegt. Der Scheitelwert muss dabei innerhalb zweier eng benachbarter Spannungswerte konstant gehalten werden, damit eine zuverlässige Ionisation ohne unerwünschte Nebeneffekte erfolgt.

In der Praxis muss allerdings hierbei beachtet werden, dass insbesondere bei Geräten mit kleiner Bauform seitens des Hochspannungsgenerators auch nur ganz begrenzte Spannungsbereiche für die Scheitelspannung zur Verfügung stehen. Das beschriebene Gerät für die Beseitigung von Gerüchen in einer Toilette muss beispielsweise eine sehr kleine Bauform besitzen, wenn es in einen bereits vorhandenen Spülkasten einer Toilettenspülung integriert werden soll. Der hierbei zur Verfügung stehende Hochspannungstransformator liefert in diesem Fall typischerweise Scheitelwerte zwischen 1200 V und 2600 V. Sollte nun aber die gewünschte Ionisation gerade einen Scheitelwert benötigen, der außerhalb des vom Hochspannungstransformator abgegebenen Spannungsbereichs liegt, dann kann die gewünschte Ionisation nicht erreicht werden.

Bislang wurde der Ausgestaltung der Innenelektrode einer Ionisationsröhre keine besondere Bedeutung zugemessen.

Aus DE 101 27 035 A1 ist es bekannt, für Innen- und Außenelektrode gleichermaßen ein Drahtgeflecht bestehend aus einem Edelstahldraht vorzusehen. Aus dem praktischen Einsatz sind darüber hinaus Innenelektroden bestehend aus einem Aluminium Feinblech oder bestehend aus einer Silberbedampfung auf der Innenseite des Glaskolbens bekannt.

Insbesondere bei der Fertigung von Ionisationsröhren kleiner Bauform hat sich nun gezeigt, dass bei den zur Verfügung stehenden Scheitelspannungen zwischen 1200 V und 2600 V starke Toleranzen der abgegebenen Ionisationsleistung bei vorgegebener Scheitelspannung auftreten können.

Aufgabe der Erfindung ist es daher, eine Ionisationsröhre der Eingangs angegebenen Art zu schaffen, für die geringe Toleranzen der abgegebenen Ionisationsleistung bei vorgegebener Scheitelspannung auch bei einer Massenfertigung kostengünstig eingehalten werden können.

Diese Aufgabe wird durch eine Ionisationsröhre mit den Merkmalen des Anspruchs 1 und ein Luftreinigungsgerät mit den Merkmalen des Anspruchs 7 gelöst.

Ein wesentliches Merkmal der Erfindung besteht darin, dass die Hülse eine Nahtstelle derart aufweist, dass der Außendurchmesser der Hülse an den Innendurchmesser des Glaskolbens anpassbar ist, und dass auf die Feinblechhülse ein zusätzliches Federelement derart wirkt, dass die Feinblechhülse unter Federspannung an der Innenseite des Glaskolbens anliegt.

Die Erkenntnis der Erfindung besteht darin, dass die Ausgestaltung der Innenelektrode einen hohen Einfluss auf die Toleranzen der abgegebenen Ionisationsleistung bei vorgegebener Scheitelspannung hat. Hiervon ausgehend ermöglicht es die Erfindung, dass die Innenelektrode bei der Massenfertigung einer Ionisationsröhre sehr gut reproduzierbar an der Innenseite des Glaskolbens anliegt. Dies wird zum einen durch die glatte Oberfläche der Feinblechhülse und zum anderen durch das Aufbringen einer Federspannung durch ein zusätzliches Federelement bewirkt.

Das zusätzliche Federelement ermöglicht es, neben der Eigenfederwirkung der Feinblechhülse eine speziell angepasste Federkraft auf die Feinblechhülse aufzubringen, die für die jeweiligen Fertigungs- und Betriebsbedingungen optimiert werden kann.

Nach einer bevorzugten Ausführungsform ist vorgesehen, dass die Außenelektrode aus einem Drahtgittergeflecht besteht. Vorzugsweise ist das Drahtgittergeflecht schlauchartig ausgebildet und kann so auf einfache Weise über den Glaskolben gezogen werden.

Nach einer weiteren bevorzugten Ausführungsform ist vorgesehen, dass das Federelement integraler Bestandteil der Feinblechhülse ist. Beispielsweise kann die Nahtstelle abgekantete Enden aufweisen, die als Federelement wirken. Wesentlich ist lediglich, dass das Federelement neben der eigentlichen Form der Feinblechhülse ein zusätzliches Element bildet.

Nach einer weiteren bevorzugten Ausführungsform ist vorgesehen, dass das Federelement aus einem elastischen Zylinderteil besteht, das von der Feinblechhülse ummantelt ist. Beispielsweise kann das elastische Zylinderteil aus Gummi oder Schaumstoff bestehen.

Nach einer weiteren bevorzugten Ausführungsform ist vorgesehen, dass die Außenelektrode und die Innenelektrode mit Anschlussteilen einer Renkverbindung kontaktiert sind. Besonders bewährt hat sich die Ausgestaltung der Anschlussteile in Form einer Swan-Fassung mit formschlüssiger Sicherung, die auch für die Fassung von Glühbirnen für Autoscheinwerfer verwendet wird. Andere Ausführungsformen von Renkverbindungen sind Bajonettverbindungen oder Verbindungspaare mit Bolzen und Lochschlitzen.

Nach einer weiteren bevorzugten Ausführungsform ist vorgesehen, dass die Feinblechhülse mit einem Lochraster versehen ist. Hierbei wurde festgestellt, dass die Ionisationsleistung der Ionisationsröhre in Abhängigkeit von dem Lochraster einstellbar ist. Nach einer weiteren bevorzugten Ausführungsform ist daher vorgesehen, dass der Lochdurchmesser und der Lochabstand des Lochrasters derart gewählt sind, dass bei einer vorgegebenen oszillierenden Hochspannung, die zwischen der Innenelektrode und der Außenelektrode anliegt, eine vorgegebene Ionisationsstärke erzielt wird. Je größer der Lochdurchmesser und der Lochabstand des Lochrasters sind, desto mehr verringert sich die Ionisationsleistung der Ionisationsröhre bei vorgegebener Scheitelspannung zwischen Innenelektrode und Außenelektrode.

Nach einer weiteren bevorzugten Ausführungsform ist vorgesehen, dass der Lochdurchmesser 1,1 mm und der Lochabstand 1,75 mm betragen. Dieses Lochraster hat sich bei üblichen Scheitelwerten von 1200 V bis 2600 V bewährt.

Nach einer bevorzugten Ausführungsform ist vorgesehen, dass der Glaskolben zylinderförmig ausgebildet ist. Insbesondere die Form eines geraden Kreiszylinders ist einfach und kostengünstig zu fertigen.

Nach einer weiteren bevorzugten Ausführungsform ist vorgesehen, dass die Wandstärke des Glaskolbens im wesentlichen konstant ausgebildet ist und ungefähr im Bereich von 1/30 bis 1/20, vorzugsweise bei 1/25 des Zylinderaußendurchmessers liegt. Nach einer weiteren bevorzugten Ausführungsform ist vorgesehen, dass die Zylinderhöhe größer als der Zylinderaußendurchmesser, vorzugsweise 1 bis 20 mal so groß ist. Es hat sich herausgestellt, dass bei diesen Wandstärken und Zylinderhöhen ein guter Kompromiss zwischen zu erreichender Kapazität, zu erreichender Ionisation und notwendiger Stabilität erzielt wird.

Für die spezielle Anwendung einer kleinen Ionisationsröhre im Haushaltsbereich, beispielsweise zur Geruchsbeseitigung in Toiletten, haben sich ein Zylinderaußendurchmesser von 20 mm, ein Zylinderhöhe von 50 mm und eine Wandstärke von 0,8 mm bewährt. Die Kapazität der Ionisationsröhre liegt dann im Bereich von ca. 50 nF bei einer Raumtemperatur von 20 °C und einer Luftfeuchtigkeit von 25 %.

Nach einer weiteren bevorzugten Ausführungsform ist vorgesehen, dass eine Grundfläche des Zylinders geschlossen und die andere Grundfläche des Zylinders offen ausgebildet ist, um durch die offene Grundfläche des Zylinders die Zuleitung für die Innenelektrode zu führen. Aus fertigungstechnischen Gründen können aber auch beide Grundflächen offen ausgebildet sein. Zweckmäßigerweise ist für die offenen Grundflächen ein Verschlussteil zum Verschließen des offenen Glaskolbens vorgesehen.

Nach einer weiteren bevorzugten Ausführungsform ist vorgesehen, dass die Innenelektrode aus einem Edelstahl-Feinblech besteht. Vorzugsweise weist das Edelstahl-Feinblech eine Stärke auf, die im Bereich von 1/200 bis 1/20, vorzugsweise bei 1/100 des Zylinderaußendurchmessers liegt. Vorzugsweise wird die eigene Federwirkung des Edelstahl-Feinblechs ausgenutzt, um das Edelstahl-Feinblech an die Innenwand des Glaskolbens anzudrücken. Die Wandstärke des Edelstahl-Feinblechs muss dann so gewählt werden, dass das Blech gut in eine Zylinderform gebracht werden kann und gleichzeitig noch eine ausreichende Federwirkung aufweist.

Nach einer weiteren bevorzugten Ausführungsform ist vorgesehen, dass das Drahtgittergeflecht eine Maschenweite aufweist, die das 3-fache bis 10-fache, vorzugsweise das 4-fache bis 5-fache des Drahtdurchmessers beträgt. Diese Maße haben sich für die Außenelektrode bewährt, damit die zu ionisierende Luft an der Außenelektrode vorbeiströmen kann und einer ausreichenden Ionisation unterworfen werden kann, wobei das Drahtgittergeflecht an der Außenseite des Glaskolbens anliegt. Vorzugsweise betragen der Drahtdurchmesser 0,36 mm und die Maschenweite 1,4 mm.

Für das Drahtgittergeflecht hat sich die Verwendung eines Edelstahldrahts bewährt, da dieser alterungsbeständig ist und nicht korridiert.

Nach einer weiteren bevorzugten Ausführungsform ist vorgesehen, dass der Glaskolben aus einem Kalksodaglas besteht. Hier handelt es sich um ein verhältnismäßig weiches Glas, das unter einem Luft/Gasgemisch leicht zu verarbeiten und damit kostengünstig zu fertigen ist.

Mit der erfindungsgemäßen Ionisationsröhre kann ein Luftreinigungsgerät zur Verminderung von Schadstoffen in der Luft aufgebaut werden, wobei die Ionisationsröhre einer Luftströmung ausgesetzt ist und wobei eine Treiberstufe vorgesehen ist, die an die Innenelektrode und die Außenelektrode der Ionisationsröhre angeschlossen ist und die die Ionisationsröhre mit Ionisationsleistung beaufschlagt.

Nach einer bevorzugten Ausführungsform ist vorgesehen, dass die Treiberstufe einen Hochspannungstransformator umfasst, an dessen Sekundärseite eine oszillierende Hochspannung erzeugbar ist. Die der Ionisationsröhre zugeführte Ionisationsleistung ist vor allem durch den Scheitelwert der oszillierenden Hochspannung und/oder durch das Pulsen der oszillierenden Hochspannung beeinflussbar. Vorzugsweise umfasst die Treiberstufe eine Schaltung zur Pulsweitenmodulation, mit der der Hochspannungstransformator primärseitig ansteuerbar und der Scheitelwert und/oder das Pulsverhältnis der sekundärseitig oszillierenden Hochspannung einstellbar ist. Bei einer Reihenschaltung bestehend aus Hochspannungstransformator und Resonator, der eingangsseitig mit einer Gleichspannung gespeist wird, kann das pulsweitenmodulierte Signal gleichgerichtet und dem Eingang des Resonators zugeführt werden. Der Resonator liefert wiederum eine oszillierende Spannung an die Primärseite des Hochspannungstransformators, so dass der Scheitelwert an der Sekundärseite des Hochspannungstransformators damit proportional zum Pulsweitenverhältnis ist. Zusätzlich oder alternativ kann vorgesehen sein, dass die an der Sekundärseite abgegebene Hochspannung gepulst wird. Dies bedeutet, dass die Ionisationsröhre nur mit einer bestimmten Anzahl von Vollwellen beaufschlagt wird, bevor dann die oszillierende Hochspannung wieder unterbrochen wird. Die damit im Mittel zugeführte Ionisationsleistung ist ebenfalls proportional zum Pulsweitenverhältnis. Das Pulsweitenverhältnis kann aus dem gleichen Pulsweitenmodulationssignal gewonnen werden, das am Eingang des Resonators anliegt, oder aber es wird für diesen Zweck ein weiteres Pulsweitenmodulationssignal erzeugt.

Nach einer weiteren bevorzugten Ausführungsform ist vorgesehen, dass die sekundärseitig oszillierende Hochspannung mit einem Scheitelwert im Bereich von 500 V bis 10 kV und mit einer Frequenz im Bereich von 10 kHz bis 50 kHz einstellbar ist.

Selbstverständlich sind die oben beschriebenen und/oder in den Unteransprüchen aufgeführten Ausführungsformen nicht nur in der jeweils angegebenen Kombination, sondern auch in anderen Kombinationen oder in Alleinstellung anwendbar.

Im Folgenden wird die Erfindung anhand verschiedener Ausführungsbeispiele mit Bezug auf die beiliegenden Zeichnungen näher erläutert. Diese zeigen:
- Fig. 1:: ein Glaskolben in der Seitenansicht und in der Längsansicht,
- Fig. 2:: eine Außenelektrode in der Seitenansicht und in der Längsansicht,
- Fig. 3:: eine Innenelektrode in der Seitenansicht und in der Längsansicht,
- Fig. 4:: eine erste Fertigungsvorrichtung für eine Innenelektrode gemäß der Erfindung und
- Fig. 5:: eine zweite Fertigungsvorrichtung für eine Innenelektrode gemäß der Erfindung.

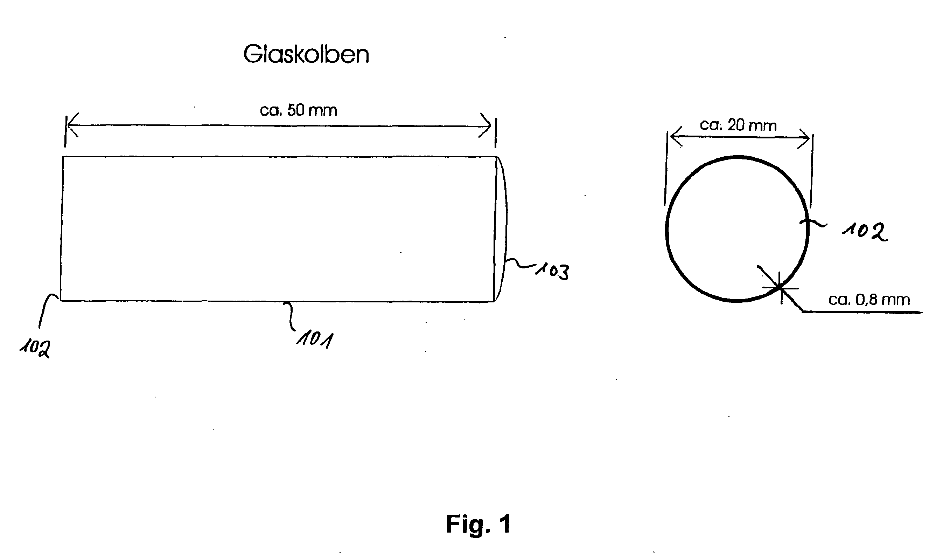

Der Glaskolben, die Außenelektrode und die Innenelektrode nach den Figuren 1 - 3 sind zu einer erfindungsgemäßen Ionisationsröhre zusammenbaubar. Eine derartige Ionisationsröhre hat sich im Haushaltsbereich bewährt, beispielsweise beim Einbau in Spülkästen einer Toilette gemäß der oben erwähnten DE 198 10 497 A1. Die Ansteuerung erfolgt über einen Hochspannungstransformator, über den eine Ansteuerspannung mit einer Scheitelspannung zwischen 1000 V und 2000 V sowie einer Frequenz zwischen 20 kHz und 30 kHz erzeugbar ist, die zwischen der Innenelektrode und der Außenelektrode anliegt. Hierzu werden die Innenelektrode und die Außenelektrode entsprechend kontaktiert. Als Anschlussleitungen wird vorzugsweise eine koaxial abgeschirmte Leitung verwendet, z. B. der Leitungstyp RG58CU.

Fig. 1 zeigt den Glaskolben in der Seitenansicht und in der Längsansicht. Der Glaskolben 101 weist eine gerade Kreiszylinderform mit einer Zylinderhöhe von 50 mm auf. Die Grundfläche 102 ist offen ausgebildet, während die Grundfläche 103 geschlossen ist. Die offene Grundfläche 102 dient zur Zuführung des Kabels für die Innenelektrode und kann mit einem Verschlussteil verschlossen werden. Der Glastyp ist ein Kalksodaglas, mit dem sich der dargestellte Außendurchmesser von 20 mm bei einer Wandstärke von 0,8 mm gut fertigen lässt.

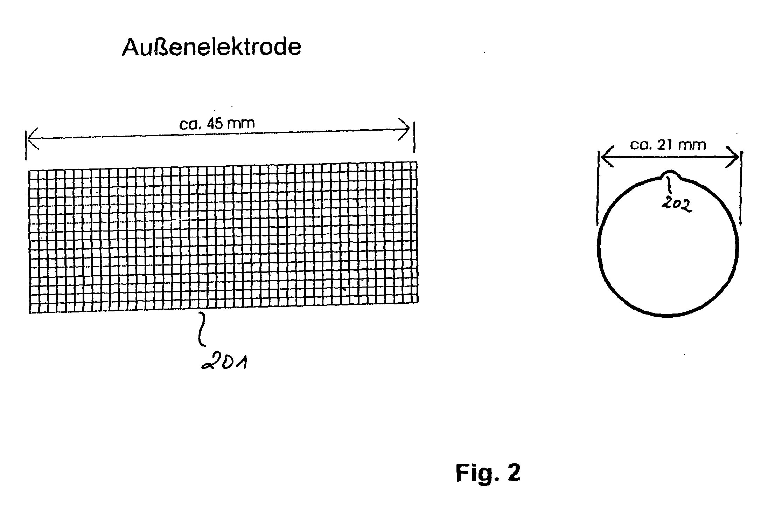

Fig. 2 zeigt die Außenelektrode in der Seitenansicht und in der Längsansicht. Die Außenelektrode 201 besteht aus einem Edelstahl-Drahtgeflecht mit einer Maschenweite von 1,4 mm und einem Drahtdurchmesser von 0,36 mm. Das Edelstahl-Drahtgeflecht ist ebenfalls zylinderförmig gebogen, wobei die Länge von 45 mm und der Durchmesser von ca. 21 mm so angepasst sind, dass die Außenelektrode 201 über den Glaskolben 101 gestülpt werden kann. Die Sicke 202 dient der Anpassung an den exakten Durchmesser des Glaskolbens. Durch leichtes längsseitiges Zupressen legt sich das Drahtgitter bestmöglich an das Glas an. Alternativ dazu kann das Drahtgeflecht auch schlauchförmig ausgebildet sein und aus einem selbstdehnbaren Material bestehen, so dass das Drahtgeflecht selbstanpassend über den Glaskolben gezogen werden kann.

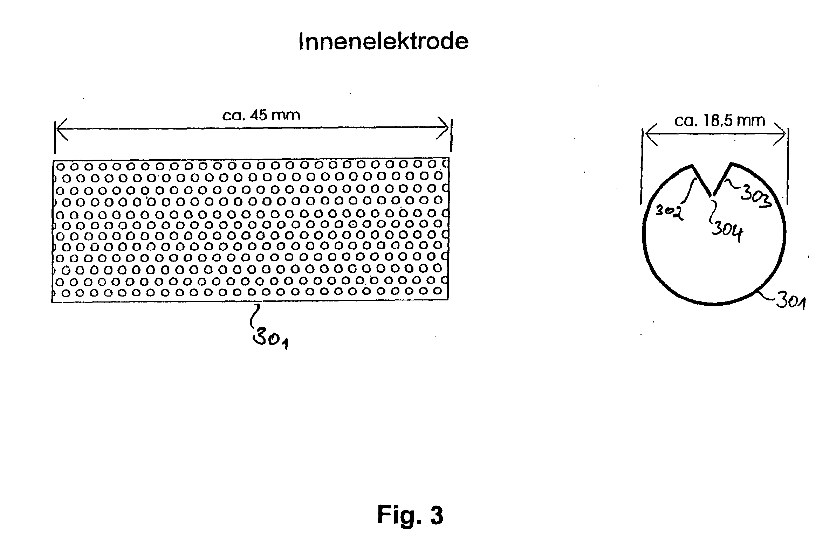

Fig. 3 zeigt die Innenelektrode in der Seitenansicht und in der Längsansicht. Die Innenelektrode 301 besteht aus einem Edelstahl-Feinlochblech mit einer Stärke von 0,2 mm und einem Lochraster, das einen Lochdurchmesser von 1,1 mm und einen Lochabstand von 1,75 mm aufweist. Als Blechstähle bieten sich die in DIN 1614, 1623 und 1624 beschriebenen Stähle an.

Die Innenelektrode 301 wird in einer geeigneten Fertigungsvorrichtung auf einen Außendurchmesser gebracht, der geringfügig größer als der Innendurchmesser des Glaskolbens 101 ist. Die Enden 302 und 303 sind abgekantet, stoßen an der der Stelle 304 zusammen und bilden damit das Federelement. Durch die federnden Enden 302 und 303 kann die Innenelektrode 301 radial leicht zusammengedrückt werden, wodurch sich eine Federspannung aufbaut, die die Innenelektrode beim Einschieben in den Glaskolben 101 an die Innenwand des Glaskolbens 101 drückt. Zu beachten ist schließlich, dass die Lochgrate des Lochrasters in das Innere der Innenelektrode 301 zeigen, so dass die Außenwand der Innenelektrode bestmöglich an der Innenwand des Glaskolbens 101 anliegt.

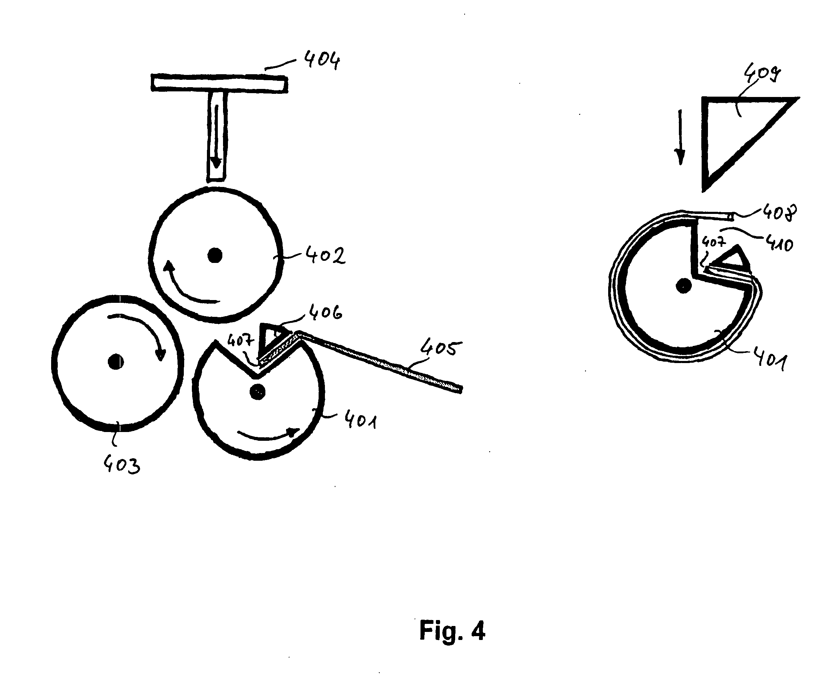

Fig. 4 zeigt eine erste Fertigungsvorrichtung für eine Innenelektrode gemäß der Erfindung. Die Fertigungsvorrichtung besteht aus einer Antriebswalze 401, einer Anpresswalze 402 und einer Führungswalze 403. Die Anpresswalze 402 kann mit einer Hydraulikpresse 404 an die Antriebswalze 401 und die Führungswalze 403 gepresst werden. Ein Edelstahl-Feinblech 405 wird mittels einer Spannvorrichtung 406 in die Antriebswalze 401 eingespannt. Die Spannvorrichtung 406 ist so ausgebildet, dass das erste freie Ende 407 bereits in gewünschter Weise nach innen abgewinkelt ist.

Zur Fertigung einer Innenelektrode gemäß Fig. 3 wird die Anpresswalze 402 mittels der Hydraulikpresse 404 gegen die Antriebswalze 401 und die Führungswalze 403 gepresst. Bei beginnender Drehung nimmt die Antriebswalze das Edelstahl-Feinblech 405 mit und bringt es in eine Zylinderform, deren Innendurchmesser näherungsweise dem Außendurchmesser der Antriebswalze 401 entspricht.

In einem zweiten Fertigungsschritt wird das zweite freie Ende 408 des Edelstahl-Feinblech 405 in gewünschter Weise nach innen abgewinkelt. Hierzu ist ein Stempel 409 vorgesehen, der in die freie Öffnung 410 der Walze 401 gefahren wird.

Der tatsächliche Innendurchmesser des Edelstahl-Feinblechs 405 ergibt sich nach Herausnahme des Edelstahl-Feinbleches 405 aus der Fertigungsvorrichtung unter Berücksichtigung der Rückfederung, die eine gewisse Vergrößerung des Innendurchmessers gegenüber dem Außendurchmesser der Antriebswalze 401 bewirkt. Die gefertigte Innenelektrode entspricht der in Fig. 3 abgebildeten Innenelektrode.

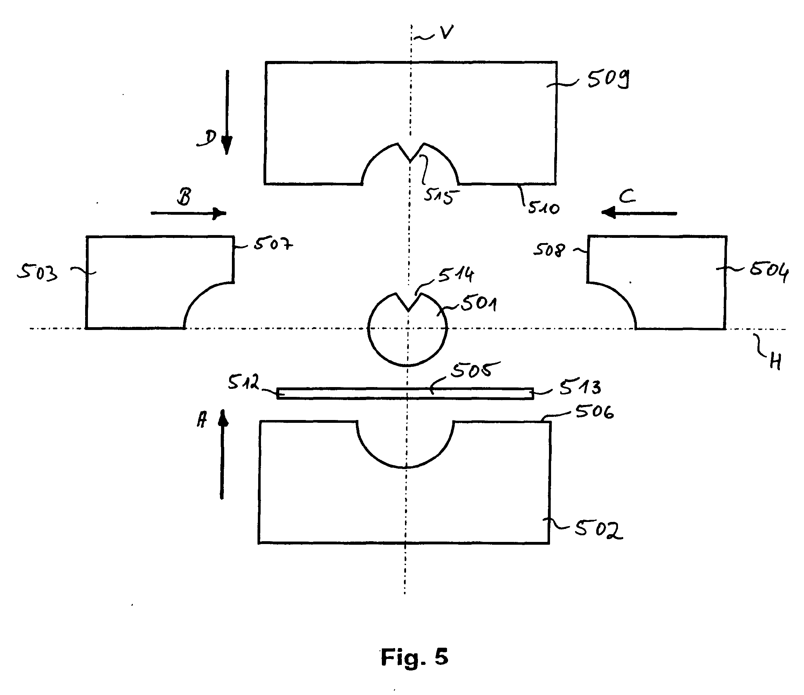

Fig. 5 zeigt eine zweite Fertigungsvorrichtung für eine Innenelektrode gemäß der Erfindung. Die Fertigung erfolgt hier nach dem Prinzip des Gesenkbiegens. Die Fertigungsvorrichtung besteht aus einem feststehenden Stempel 501, sowie vier beweglichen Biegegesenken 502, 503, 504 und 509. Das Edelstahl-Feinblech 505 wird vor der Fertigung mit Anschlägen zwischen dem Stempel 501 und dem Biegegesenk 502 symmetrisch zur Vertikallinie V positioniert.

In einem ersten Schritt wird das Biegegesenk 502 in Richtung A gegen den Stempel 501 gefahren, bis die Kante 506 mit der Horizontallinie H fluchtet. Das Edelstahl-Feinblech wird dabei in einem 180° Bogen um den Stempel 501 gebogen.

In einem zweiten Schritt wird das Biegegesenk 503 in Richtung B gegen den Stempel 501 gefahren, bis die Kante 507 mit der Vertikallinie V fluchtet. Das Edelstahl-Feinblech wird dabei in einem 90° Bogen um den Stempel 501 gebogen.

In einem dritten Schritt wird entsprechend dem zweiten Schritt das Biegegesenk 504 in Richtung C gegen den Stempel 501 gefahren, bis die Kante 508 mit der Vertikallinie V fluchtet. Das Edelstahl-Feinblech wird dabei in einem weiteren 90° Bogen um den Stempel 501 gebogen und erhält damit seine gewünschte Zylinderform. Der zweite und dritte Fertigungsschritt können selbstverständlich auch gleichzeitig durchgeführt werden.

In einem vierten Schritt wird das Biegegesenk 509 in Richtung D gegen den Stempel 501 gefahren, bis die Kante 510 mit der Horizontallinie H fluchtet. Die Nase 515 drückt dabei in die Nut 514, wodurch die beiden freien Enden 512 und 513 des Edelstahl-Feinblechs 505 in die gewünschte Position nach innen gebogen werden.

Der tatsächliche Innendurchmesser der gefertigten Innenelektrode ergibt sich nach Herausnahme des Edelstahl-Feinbleches 505 aus der Fertigungsvorrichtung unter Berücksichtigung der Rückfederung, die eine gewisse Vergrößerung des Innendurchmessers gegenüber dem Außendurchmesser des Stempels 501 bewirkt. Die gefertigte Innenelektrode entspricht der in Fig. 3 abgebildeten Innenelektrode.

## Patentansprüche

1. Ionisationsröhre für ein Luftreinigungsgerät
mit einem Glaskolben (101),
mit einer als Feinblechhülse geformten Innenelektrode (301) und
mit einer Außenelektrode (201),
**dadurch gekennzeichnet,**
**dass** die Hülse eine Nahtstelle derart aufweist, dass der Außendurchmesser der Hülse an den Innendurchmesser des Glaskolbens (101) anpassbar ist, und
**dass** auf die Feinblechhülse ein zusätzliches Federelement (302, 303, 304) derart wirkt, dass die Feinblechhülse unter Federspannung an der Innenseite des Glaskolbens (101) anliegt.

2. Ionisationsröhre nach Anspruch 1, **dadurch gekennzeichnet, dass** die Außenelektrode (201) aus einem Drahtgittergeflecht besteht.

3. Ionisationsröhre nach einem der Ansprüche 1 - 2, **dadurch gekennzeichnet, dass** das Federelement (302, 303, 304) integraler Bestandteil der Feinblechhülse ist.

4. Ionisationsröhre nach einem der Ansprüche 1 - 2, **dadurch gekennzeichnet, dass** das Federelement (302, 303, 304) aus einem elastischen Zylinderteil besteht, das von der Feinblechhülse ummantelt ist.

5. Ionisationsröhre nach einem der Ansprüche 1 - 4, **dadurch gekennzeichnet, dass** die Außenelektrode (201) und die Innenelektrode (301) mit Anschlussteilen einer Renkverbindung kontaktiert sind.

6. Ionisationsröhre nach einem der Ansprüche 1 - 5, **dadurch gekennzeichnet, dass** die Feinblechhülse mit einem Lochraster versehen ist.

7. Ionisationsröhre nach Anspruch 6, **dadurch gekennzeichnet, dass** der Lochdurchmesser und der Lochabstand des Lochrasters derart gewählt sind, dass bei einer vorgegebenen oszillierenden Hochspannung, die zwischen der Innenelektrode (301) und der Außenelektrode (201) anliegt, eine vorgegebene Ionisationsstärke erzielt wird.

8. Luftreinigungsgerät zur Verminderung von Schadstoffen in der Luft
mit einer Ionisationsröhre nach einem der Ansprüche 1 - 7, die einer Luftströmung ausgesetzt ist, und
mit einer Treiberstufe, die an die Innenelektrode (301) und die Außenelektrode (201) der Ionisationsröhre angeschlossen ist und die Ionisationsröhre mit Ionisationsleistung beaufschlagt.

## Claims

1. Ionisation tube for an air purification device,
comprising a glass cylinder (101),
comprising an internal electrode (301) being shaped as a sheet sleeve, and
comprising an external electrode (201),
**characterized in**
**that** the sleeve has a seam such that the outer diameter of the sleeve is adjustable to the inner diameter of the glass cylinder (101), and
**that** an additional spring element (302, 303, 304) acts on the sheet sleeve such that the sheet sleeve lies against the inner side of the glass cylinder (101) under spring tension.

2. Ionisation tube according to claim 1, **characterized in that** the external electrode (201) consists of a wire netting.

3. Ionisation tube according to one of the claims 1 - 2, **characterized in that** the spring element (302, 303, 304) is an integral component of the sheet sleeve.

4. Ionisation tube according to one of the claims 1 - 2, **characterized in that** the spring element (302, 303, 304) consists of an elastic cylindrical part which is jacketed by the sheet sleeve.

5. Ionisation tube according to one of the claims 1 - 4, **characterized in that** the external electrode (201) and the internal electrode (301) are contacted with connecting parts of a renk connection.

6. Ionisation tube according to one of the claims 1 - 5, **characterized in that** the sheet sleeve has a pattern of holes.

7. Ionisation tube according to claim 6, **characterized in that** the diameter of the holes and the distance between the holes of the pattern of holes are chosen such that with a predetermined oscillating high voltage applied between the internal electrode (301) and the external electrode (201) a predetermined ionisation intensity is achieved.

8. Air purification device for reducing pollutants in the air,
comprising an ionisation tube according to one of the claims 1 - 7 being subjected to an air flow, and
comprising a driver stage being connected to the internal electrode (301) and the external electrode (201) of the ionisation tube and which may act on the ionisation tube by supplying ionisation power.

## Revendications

1. Tube d'ionisation pour un appareil d'épuration de l'air
avec une ampoule en verre (101),
avec une électrode intérieure (301) formée en douille en tôle fine, et
avec une électrode extérieure (201),
**caractérisé en ce que**,
la douille présente un point de couture, **en ce que** le diamètre extérieur de la douille est adaptable au diamètre intérieur de l'ampoule en verre (101), et
**en ce que**, sur la douille en tôle fine, agit un élément élastique (302, 303, 304) supplémentaire, **en ce que** la douille en tôle fine appuie, avec une précontrainte élastique, sur la face intérieure de l'ampoule en verre (101).

2. Tube d'ionisation selon la revendication 1, **caractérisé en ce que** l'électrode extérieure (201) est formée d'une tresse en grille de fil métallique.

3. Tube d'ionisation selon l'une des revendications 1 à 2, **caractérisé en ce que** l'élément élastique (302, 303, 304) fait partie intégrante de la douille en tôle fine.

4. Tube d'ionisation selon l'une des revendications 1 à 2, **caractérisé en ce que** l'élément élastique (302, 303, 304) est formé d'une partie cylindrique élastique, enveloppée de la douille en tôle fine.

5. Tube d'ionisation selon l'une des revendications 1 à 4, **caractérisé en ce que** l'électrode extérieure (201) et l'électrode intérieure (301) sont mises en contact avec des parties de raccordement d'une liaison à accrochage

6. Tube d'ionisation selon l'une des revendications 1 à 5, **caractérisé en ce que** la douille en tôle fine est munie d'une trame perforée.

7. Tube d'ionisation selon la revendication 6, **caractérisé en ce que** le diamètre de trou et l'espacement des trous de la trame perforée sont choisis tel que, dans le cas d'une haute tension oscillante, prédéterminée, appliquée entre l'électrode intérieure (301) et l'électrode extérieure (201), on obtient une intensité d'ionisation prédéterminée.

8. Appareil d'épuration de l'air pour diminuer la teneur en substances nocives dans l'air,
avec un tube d'ionisation selon l'une des revendications 1 à 7, exposé à un écoulement d'air, et
avec un étage pilote, raccordé à l'électrode intérieure (301) et à l'électrode extérieure (201) du tube d'ionisation et sollicitant le tube d'ionisation avec une puissance d'ionisation.
